# EUROPEAN PATENT APPLICATION

(11) **EP 2 093 086 A1**
(43) Date of publication of application: **26.08.2009**
(21) Application number: 08101939.0
(22) Date of filing: 25.02.2008
(51) Int. Cl.: B60J 7/00

(54) **Sunshade assembly and open roof construction provided therewith**

(71) Applicant: Inalfa Roof Systems Group B.V., 5804 AH Venray (NL)
(72) Inventor: Jansen, Carlo, 5821 AW Vierlingsbeek (NL)
(74) Representative: Voncken, Bartholomeus Maria Ch.

(57) **Abstract**

A sunshade assembly comprises a flexible sunscreen having opposed longitudinal edges and opposed transversal edges; a rotatable winding shaft configured for winding and unwinding the sunscreen at a first one of its transversal edges; an operating beam connected to the second one of the transversal edges of the sunscreen; two rotatable drive members positioned at the opposite ends of and concentrically with the winding shaft and respectively connected therewith by means of a spring member; two drive parts extending along and capable of a movement in parallel to the longitudinal edges of the sunscreen, wherein each drive part is driven by a corresponding drive member and is connected to the operating beam. The spring members load the winding shaft in a direction for winding the sunscreen and load the drive members in a direction for, through the drive parts, moving the operating beam away from the winding shaft.

## Description

The invention relates to a sunshade assembly.

A major field of application of sunshade assemblies of the type according to the invention is defined by open roof constructions for vehicles comprising a roof opening in a stationary roof part and a movable closure panel for opening and closing said roof opening, wherein below said roof opening there is provided such a sunshade assembly.

A known sunshade assembly comprises a rotatable winding shaft configured for winding and unwinding a sunscreen. An operating beam is connected to a free transversal edge of the sunscreen and is guided in guides extending along longitudinal sides of the sunscreen. A long torsion spring positioned inside the winding shaft loads latter in a direction for winding the sunscreen and for keeping the sunscreen taut.

Such a known sunshade assembly suffers from a number of drawbacks.

The winding shaft, under influence of the torsion spring, will try to rotate in a direction for winding the sunscreen, thus necessitating locking means for keeping the sunscreen in a desired position other than its fully wound position, thus complicating the assembly and increasing its cost.

Further the force generated by the torsion spring will increase substantially with unwinding the sunscreen, leading to high operational forces for moving the sunscreen. When driven by a motor these high operational forces may lead to motor whining.

The torsion spring acts only on one side of the winding tube and thus may cause a torsional deformation thereof leading to a corresponding deformation of the sunscreen (visible as wrinkles or alike) and an uneven winding and unwinding thereof, as well to a skewed position of the operating beam with attending high guide forces in the longitudinal guides.

It is an object of the present invention to provide an improved sunshade assembly.

Thus, in accordance with the present invention a sunshade assembly is provided comprising a flexible sunscreen having opposed longitudinal edges and opposed transversal edges; a rotatable winding shaft configured for winding and unwinding the sunscreen at a first one of its transversal edges; an operating beam connected to the second one of the transversal edges of the sunscreen; two rotatable drive members positioned at the opposite ends of and concentrically with the winding shaft and respectively connected therewith by means of a spring member; two drive parts extending along and capable of a movement in parallel to the longitudinal edges of the sunscreen, wherein each drive part is driven by a corresponding drive member and is connected to the operating beam; wherein the spring members load the winding shaft in a direction for winding the sunscreen and load the drive members in a direction for, through the drive parts, moving the operating beam away from the winding shaft.

The sunshade assembly according to the present invention offers, among others, the following advantages:

Because of the use of two rotatable drive members positioned at the opposite ends of and concentrically with the winding shaft and respectively connected therewith by means of a spring member the winding shaft is loaded at both ends in a corresponding manner and a torsional deformation thereof will be eliminated (or at least reduced).

The forces generated onto the operating beam by the winding shaft (through the sunscreen) at one hand and by the drive members (through the drive parts) at the other hand are directed in opposite directions and substantially are in equilibrium, thus eliminating the need for additional locking means for keeping the sunscreen in a desired position.

Because, during a movement of the sunscreen, the winding shaft and drive members rotate in the same direction, the force generated by the spring members (i.e. for loading the winding shaft in a direction for winding the sunscreen and loading the drive members in a direction for, through the drive parts, moving the operating beam away from the winding shaft and thus keeping the sunscreen taut) substantially will remain constant. It is possible, then, to keep this force in all positions of the sunscreen as close as possible to an optimal force for keeping the sunscreen taut.

In an embodiment of the sunshade assembly according to the invention the drive parts are parts for exerting a longitudinally directed pressure force. For example, the drive parts may comprise specialised drive cables which are capable of transmitting a pressure force (of course in addition to a capability of transmitting tensile forces), yet are sufficiently flexible to follow curved tracks.

In a special embodiment the drive members are gears and the drive parts are provided with an external toothing for cooperation with the gears. This offers a simple, yet nevertheless effective transmission of the rotational movement of the drive members to the drive parts.

In yet another embodiment of the sunshade assembly according to the invention the diameters of the winding shaft and the drive members are such that when the sunscreen is in a position substantially midway between fully wound and fully unwound, a movement of the sunscreen causes the winding shaft and drive members to rotate with the same angular velocity.

During winding and unwinding the sunscreen the effective diameter of the winding shaft changes. With the same translational velocity of the sunscreen a smaller effective diameter of the winding shaft results in a higher angular velocity of the winding shaft, whereas a larger effective diameter results in a lower angular velocity of the winding shaft. Thus the angular velocity of the winding shaft will increase during unwinding the sunscreen, and will decrease during winding the sunscreen. However, due to the direct engagement of the drive members onto the drive parts (which, through the operating beam, are connected to the sunscreen) the angular velocity of the drive members will remain constant (when the translational velocity of the sunscreen remains constant). As a result, during winding/unwinding a limited relative rotation will occur between the drive members and winding shaft leading to a change of the spring force generated by the spring members, and thus to a change in the tension in the sunscreen. By choosing the diameters of the winding shaft and the drive members such that when the sunscreen is in a position substantially midway between fully wound and fully unwound, a movement of the sunscreen causes the winding shaft and drive members to rotate with the same angular velocity, the effect of the changing spring force can be minimised. In the said midway position the assembly is fully balanced, and the forces acting to move the assembly to this balanced position when not in said midway position are sufficiently low to be compensated by friction (e.g. between the operating beam and guides therefore, between longitudinal edges of the sunscreen and corresponding guides therefore, etc.), such that the sunscreen will remain in any desired position between its fully wound and fully unwound positions without the need for additional locking means. Further the force for moving the sunscreen substantially will remain constant.

In one embodiment the members are torsion springs. Because, as stated before, the relative rotation between the drive members and winding shaft will be limited, these torsion springs may have a short length compared to the long torsion spring according to the state of the art which has to cope with a large number of revolutions of the winding shaft.

In yet a different embodiment the drive parts are operatively connected for a synchronised movement. This will further limit the risk of the operating beam becoming skewed (with resulting deformation of the sunscreen and high operational forces, or even jamming).

Practically this may be realised when the drive parts comprise elongations provided with a toothing engaging opposite sides of a common coupling gear.

Although it is sufficient that the gear can rotate freely (in which case the sunscreen is moved manually by gripping the operating beam, or is driven by other means), it is possible too that the common coupling gear is a driven gear, such as for example a gear driven by an electric motor.

However, as an alternative it is possible too that at least one of the drive parts is driven by an electric motor or alike.

A special embodiment of the invention relates to a sunshade assembly according to the invention, comprising two opposite guides for cooperation with the opposed longitudinal edges of the sunscreen, wherein each guide extends longitudinally in a curved manner in a plane which substantially is perpendicular to the sunscreen and in parallel to the respective longitudinal edge of the sunscreen, and wherein longitudinal edge sections of the sunscreen are less stretchable than the remainder of the sunscreen and are tensioned in the longitudinal direction of the sunscreen and wherein each guide at its concave side is provided with an inclined upwardly extending guide surface for cooperation with the sunscreen.

As a result of such a curved extension of the guides the tensioned longitudinal edge sections of the sunscreen are positioned therein in a secure manner. Because these longitudinal edge sections are less stretchable they will remain safely in the part of the guide closest to the centre of curvature of the guide. The remainder of the sunscreen, however, is sufficiently stretchable to pass over the parts of the guide further away from the centre of curvature of the guide. This results in a safe and reliable positioning of the edges of the sunscreen in the guides while keeping the forces needed therefore moderate, thus limiting frictional forces. The inclined guide surface gives fine guide characteristics balancing between the retention of the edges of the sunscreen and the frictional forces.

The invention further relates to an open roof construction for a vehicle, comprising a roof opening in a stationary roof part and a movable closure panel for opening and closing said roof opening, wherein below said roof opening there is provided a sunshade assembly according to the invention.

Hereinafter the invention will be elucidated while referring to the drawing, in which:
Figure 1 shows, schematically and in a perspective view, a sunshade assembly applied to an open roof construction;
Figure 2 shows schematically a top plan view of a sunshade assembly;
Figure 3 shows a transverse cross-section according to III-III in figure 3, and
Figure 4 shows, in accordance with a transverse cross-section according to IV-IV in figure 1, parts of the assembly.

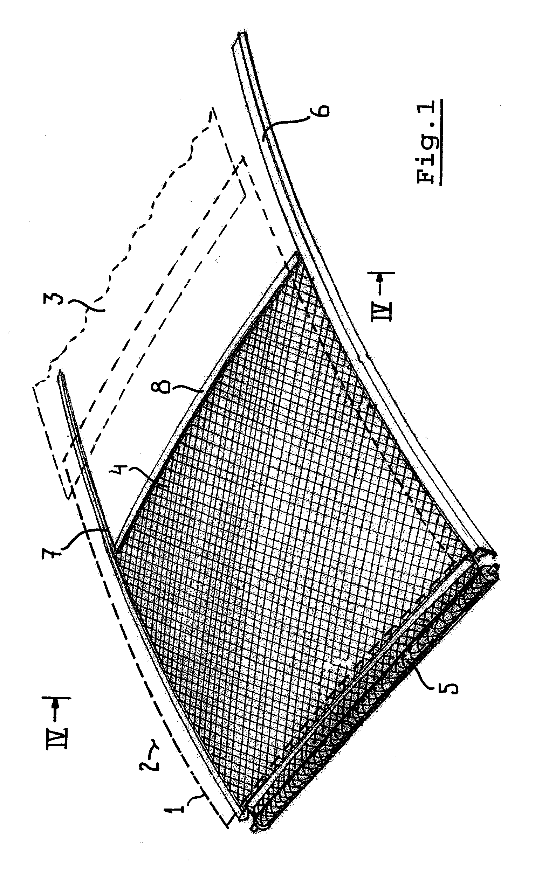

Firstly referring to figure 1, an open roof construction for a vehicle is illustrated schematically in dotted lines. Said open roof construction comprises a roof opening 1 in a stationary roof part 2 and a movable closure panel 3 which, by means not illustrated in detail but known per se, can be moved for opening and closing said roof opening 1. In figure 1 the closure panel 3 has been illustrated in a position in which it opens the roof opening 1.

Below the roof opening 1 a sunshade assembly in accordance with the present invention is positioned. Basically, said sunshade assembly comprises a flexible sunscreen 4, a rotatable winding shaft 5 for winding and unwinding the sunscreen 4, and two opposite guides 6 and 7 for cooperation with two opposite longitudinal edges of the sunscreen 4.

In so far the sunshade assembly has a conventional shape. Further, in a way known per se, the end of the sunscreen 4 opposite the end which is wound onto the winding shaft 5 is provided with an operating beam 8 which may be gripped manually for operating the sunscreen 4 and locating it in a desired position. The opposite ends of the operating beam 8 are guided in guides not illustrated here (extending along with or integrated into guides 6,7).

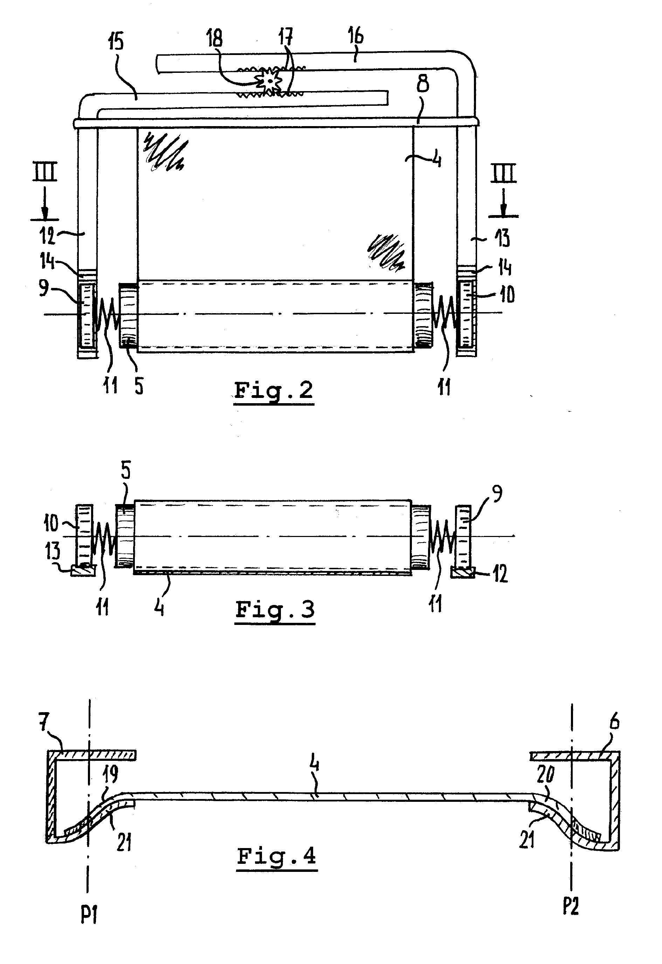

Now reference is made to figures 2 and 3. Figure 2 shows schematically a top plan view of a sunshade assembly according to the invention as applied, for example, in an open roof construction. In figure 2 the guides for the operating beam 8 have not been illustrated.

Two rotatable drive members 9 and 10 are positioned at the opposite ends of and concentrically with the winding shaft 5 and are connected therewith by means of spring members 11, in the illustrated embodiment torsion springs.

Two drive parts 12 and 13 extend along and are capable of a movement in parallel to the longitudinal edges of the sunscreen 4. Each drive part 12 and 13 is driven by a corresponding drive member 9 and 10, respectively, and is connected to the operating beam 8. It is possible that the drive parts 12 and 13 are guided by the same guides guiding the operating beam (not illustrated).

The drive parts 12 and 13 define parts for exerting a longitudinally directed pressure force onto the operating beam 8 (in addition to exerting a tensile force, when needed). For example, the drive parts are drive cables with a certain flexibility.

In the illustrated embodiment of the sunshade assembly the drive members 9,10 are gears and the drive parts 12 and 13 are provided with an external toothing 14 for cooperation with the gears.

The torsion springs 11 load the winding shaft 5 in a direction for winding the sunscreen 4 (thus generating a tensile force in the sunscreen 4 for keeping it taut), whereas the torsion springs 11 load the drive members 9,10 in a direction for, through the drive parts 12 and 13, moving the operating beam 8 away from the winding shaft (thus generating a pressure force).

When the diameters of the winding shaft 5 and the drive members 9 and 10 are such that when the sunscreen 4 is in a position substantially midway between fully wound and fully unwound, a movement of the sunscreen causes the winding shaft and drive members to rotate with the same angular velocity, in such a midway position the sunshade assembly is in an equilibrium position. In other positions of the sunscreen slight deviations from such an equilibrium (caused by an increasing or decreasing diameter of the winding shaft resulting from winding or unwinding the sunscreen) are compensated by friction in components of the assembly. Thus the sunscreen 4 will remain stationary in any position without the need for any locking means.

As can be seen in figure 2, the drive parts 12 and 13 are operatively connected for a synchronised movement. This is achieved here by elongations 15,16 of the drive parts 12,13 which are provided with a toothing 17 engaging opposite sides of a common coupling gear 18.

It is possible that the common coupling gear 18 is a driven gear, such as for example a gear driven by an electric motor (not shown).

Again referring to figure 1 in combination with figure 4 one can see that in a special embodiment each guide 6,7 extends longitudinally in a curved manner in a plane which substantially is perpendicular to the sunscreen 4 and in parallel to the respective longitudinal edge of the sunscreen 4. Said planes will be in parallel to an imaginary vertical plane extending through the longitudinal centre line of the sunscreen 4. In figure 4, which shows a partial cross-section according to IV-IV in figure 1 (not showing the drive parts), said planes have been illustrated schematically by chained lines P1 and P2.

Again referring to figure 4, it is shown clearly that longitudinal edge sections 19 and 20 of the sunscreen 4 are housed in inner parts of the guides 6 and 7. Said longitudinal edge sections 19 and 20 (which extend at the respective edges of the sunscreen 4 along the entire length thereof) are less stretchable then the remainder of the sunscreen 4 which has a certain degree of stretchability and are tensioned in the longitudinal direction of the sunscreen.

Again referring to figure 4, it is shown that each guide 6, 7 at its concave side is provided with an inclined guide surface 21. Specifically, in the illustrated embodiment, the inclined guide surface 21 has, considered in a direction towards the sunscreen 4, an inner section having a first inclination merging into a central section with a second higher inclination merging into an outer section with again a lower inclination. The curved shape of the guides 6, 7 in combination with the fact that the longitudinal edge sections 19 and 20 of the sunscreen 4 are less stretchable then the remainder of the sunscreen 4 results in a good retention of the sunscreen in the guides while keeping frictional forces low when moving the sunscreen 4 relative to the guides.

The invention is not limited to the embodiments described before, which may be varied widely within the scope of the invention as defined by the appending claims.

## Claims

1. Sunshade assembly comprising:
a flexible sunscreen having opposed longitudinal edges and
opposed transversal edges;
a rotatable winding shaft configured for winding and unwinding the sunscreen at a first one of its transversal edges;
an operating beam connected to the second one of the trans-versal edges of the sunscreen;
two rotatable drive members positioned at the opposite ends
of and concentrically with the winding shaft and respectively connected therewith by means of a spring member;
two drive parts extending along and capable of a movement in parallel to the longitudinal edges of the sunscreen, wherein each drive part is driven by a corresponding drive member
and is connected to the operating beam;
wherein the spring members load the winding shaft in a direction for winding the sunscreen and load the drive members in a direction for, through the drive parts, moving the operating beam away from the winding shaft.

2. Sunshade assembly according to claim 1, wherein the drive parts are parts for exerting a longitudinally directed pressure force.

3. Sunshade assembly according to claim 2, wherein the drive parts are drive cables.

4. Sunshade assembly according to claim 2 or 3,
wherein the drive members are gears and the drive parts are provided with an external toothing for cooperation with the gears.

5. Sunshade assembly according to any of the previous claims, wherein the diameters of the winding shaft and the drive members are such that when the sunscreen is in a position substantially midway between fully wound and fully unwound, a movement of the sunscreen causes the winding shaft and drive members to rotate with the same angular velocity.

6. Sunshade assembly according to any of the previous claims, wherein the spring members are torsion springs.

7. Sunshade assembly according to any of the previous claims, wherein the drive parts are operatively connected for a synchronised movement.

8. Sunshade assembly according to claim 7, wherein the drive parts comprise elongations provided with a toothing engaging opposite sides of a common coupling gear.

9. Sunshade assembly according to claim 8, wherein the common coupling gear is a driven gear, such as for example a gear driven by an electric motor.

10. Sunshade assembly according to any of the claims 1-8, wherein at least one of the drive parts is driven by an electric motor or alike.

11. Sunshade assembly according to any of the previous claims, comprising two opposite guides for cooperation with the opposed longitudinal edges of the sunscreen, wherein each guide extends longitudinally in a curved manner in a plane which substantially is perpendicular to the sunscreen and in parallel to the respective longitudinal edge of the sunscreen, and wherein longitudinal edge sections of the sunscreen are less stretchable than the remainder of the sunscreen and are tensioned in the longitudinal direction of the sunscreen and wherein each guide at its concave side is provided with an inclined upwardly extending guide surface for cooperation with the sunscreen.

12. Open roof construction for a vehicle, comprising a roof opening in a stationary roof part and a movable closure panel for opening and closing said roof opening,
wherein below said roof opening there is provided a sunshade assembly according to any of the previous claims.
